# EUROPEAN PATENT SPECIFICATION

(11) **EP 1 612 107 B1**
(45) Date of publication and mention of the grant of the patent: **22.11.2006**
(21) Application number: 05014187.8
(22) Date of filing: 30.06.2005
(51) Int. Cl.: B60R 19/02, B60S 1/02, F16L 3/00

(54) **Bumper structure**
Stossfängerstruktur
Structure pare-chocs

(30) Priority: 02.07.2004 JP 2004196658
(43) Date of publication of application: 04.01.2006
(73) Proprietor: HONDA MOTOR CO., Ltd., Tokyo (JP)
(72) Inventor: Iseri, Keisuke K.K. Honda Gijutsu Kenkyusho, Wako-shi Saitama-ken (JP); Takahashi, Makoto K.K. Honda Gijutsu Kenkyusho, Wako-shi Saitama-ken (JP)
(74) Representative: Rupp, Christian

(56) References cited:
- US-A- 4 318 510
- PATENT ABSTRACTS OF JAPAN vol. 1995, no. 06, 31 July 1995 (1995-07-31) & JP 07 061330 A (TOYOTA MOTOR CORP), 7 March 1995 (1995-03-07)
- PATENT ABSTRACTS OF JAPAN vol. 1995, no. 10, 30 November 1995 (1995-11-30) & JP 07 179157 A (NISSAN MOTOR CO LTD), 18 July 1995 (1995-07-18)
- PATENT ABSTRACTS OF JAPAN vol. 1996, no. 08, 30 August 1996 (1996-08-30) & JP 08 104193 A (NISHIKAWA KASEI CO LTD), 23 April 1996 (1996-04-23)

## Description

### BACKGROUND OF THE INVENTION

### Field of the Invention

The present invention relates to a bumper structure provided with a piping for washing liquid and the like.

### Description of the Related Art

A washer nozzle that sprays a washing liquid towards a headlight is provided on a bumper, and to attain this, a pipe member that supplies washing liquid to this washing nozzle is arranged within the bumper. In the case in which such a pipe member is arranged within the bumper, usually the pipe member is retained by using separate clips. However, technology exists in which, instead of such a pipe member being provided on the upper surface side of the bumper, the washing liquid supply path is integrally formed in the bumper (Japanese Unexamined Patent Application, First Publication No. H07-179157). In this technology, because clips become unnecessary, it is possible to reduce the number of parts, it is possible to reduce the mounting time, and at the same time, it is possible to improve the appearance after the pipe member is arranged.

JP 0706 1330 A discloses a bumper foam with integrated clamps holding a pipe for lamp cleaner fluid.

In the technology described above, among the structural members that form the bumper, the washing liquid supply path is integrally formed on the upper surface of the bumper body, which mainly forms the design surface (design surface). However, because the shape of the bumper body is complicated, shrinkage defects may occur during molding. This kind of defect is particularly conspicuous when it occurs in the bumper body, and thereby in terms of the quality of the external appearance, there is a new problem differing from that of the clips described above.

### SUMMARY OF THE INVENTION

Therefore, in consideration of the problems described above, an object of the present invention is to provide a bumper structure that enables reducing the number of parts, enables reducing the mounting time, enables improving the appearance after a pipe member is arranged, and thereby enables preventing degradation in the quality of the external appearance of the bumper body.

In order to achieve the above object, a first aspect of the present invention provides a bumper structure including: a bumper body; a bumper garnish disposed in an opening defined in the bumper body; and a retaining device integrally formed in the bumper garnish and retaining a pipe member.

According to the first aspect of the present invention, because the retaining device that retains the pipe member is integrally formed on the bumper garnish that is provided in an opening formed on the bumper body, the pipe member needs only to be retained by the retaining device, and it is not necessary to use separate clips. Therefore, it is possible to reduce the number of parts and to reduce the mounting time. At the same time, it is possible to improve the appearance after the pipe member is arranged. In addition, because the retaining device that retains the pipe member is integrally formed in the bumper garnish, even if shrinkage defects occur in the bumper garnish, this will not affect the bumper body, which forms the main portion of the design surface. Therefore, it is possible to prevent degradation in the quality of the external appearance of the bumper body.

As a second aspect of the invention, the bumper garnish may be is disposed along a lengthwise direction of the bumper body, and the retaining device may retain the pipe member in an arrangement in which the pipe member is arranged along a lengthwise direction of the bumper garnish and along an edge portion of the bumper garnish that extends in the lengthwise direction of the bumper garnish.

According to the second aspect, the pipe member is arranged along the lengthwise direction of the bumper garnish with respect to the retaining device that retains the pipe member so as to be oriented along the edge of the bumper garnish that extends in the lengthwise direction. Thus, the retaining orientation and the arrangement direction are identical, and as a result, it is possible to arrange the pipe member easily. Therefore, large bends and the like do not occur in the pipe member, and the flow of liquid therein is not hindered.

As a third aspect of the invention, the retaining device may include, in a lengthwise end region of the bumper garnish, a clamping device that conforms to a shape of the pipe member, and a slit portion that is located closer to an end of the bumper garnish than the clamping device, and the pipe member may be arranged by being retained by the clamping device and being inserted through the slit portion.

According to the third aspect, after the pipe member is retained by the clamping devices that conform to the shape of the pipe member, the pipe member is inserted through the slit portions at the ends of the bumper garnish in the lengthwise direction, which are closer to the end portions than the clamping devices, so as to be guided to the outside. Thus, the pipe member is guided to the outside, and arrangement is carried out easily while avoiding the center portion in the lengthwise direction, whose layout design is difficult. Therefore, large bends and the like do not occur in the pipe member, and the flow of the liquid therein is not hindered. In addition, the pipe member is inserted through the slit portions after being retained in the bumper garnish by the clamping devices, and thus the pipe member can be guided through the slit portions to the outside without separating from the bumper garnish.

As a fourth aspect of the invention, the bumper garnish may be disposed below of a bumper beam that is connected to a body frame, and the pipe member may be arranged along a lower edge portion of the bumper garnish.

According to the fourth aspect, the pipe member is provided along the lower edge portion of the bumper garnish that is provided below the bumper beam, and thus it is possible to arrange the pipe member while avoiding the bumper beam.

### BRIEF DESCRIPTION OF THE DRAWINGS

FIG. 1 is a back view showing bumper structure of the embodiment of the present invention, along with the bumper beam and the radiator core support.
FIG. 2 is a front view showing the vehicle that includes the bumper structure of the embodiment of the present invention.
FIG. 3 is a perspective drawing showing the washer nozzle provided in the bumper structure of the embodiment of the present invention.
FIG. 4 is a back view showing the bumper structure of the embodiment of the present invention.
FIG. 5 is a perspective drawing viewing the bumper structure of the embodiment of the present invention from the back right side in the longitudinal direction of the vehicle.
FIG. 6 is an enlarged perspective drawing viewing the essential components of the bumper structure of the embodiment of the present invention in the longitudinal direction of the vehicle from the right side.

### DETAILED DESCRIPTION OF THE INVENTION

An embodiment of the bumper structure of the present invention will be explained with reference to the drawings. Note that in the following explanation, the term longitudinal refers to the front-to-back direction of the vehicle body.

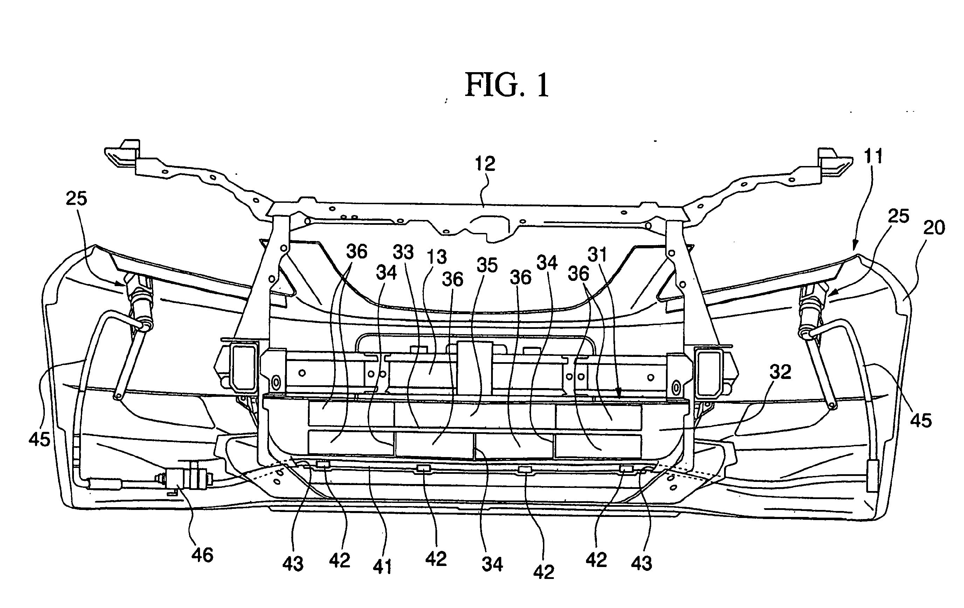

FIG. 1 is a drawing viewing a bumper 11 and the vicinity thereof from the back side (rear side). In the front portion of the vehicle body, a bumper beam 13 is provided along the widthwise direction of the vehicle on the front side of the frame-shaped radiator core support 12, and the bumper 11 is provided along the widthwise direction of the vehicle closer to the front than this bumper beam 13.

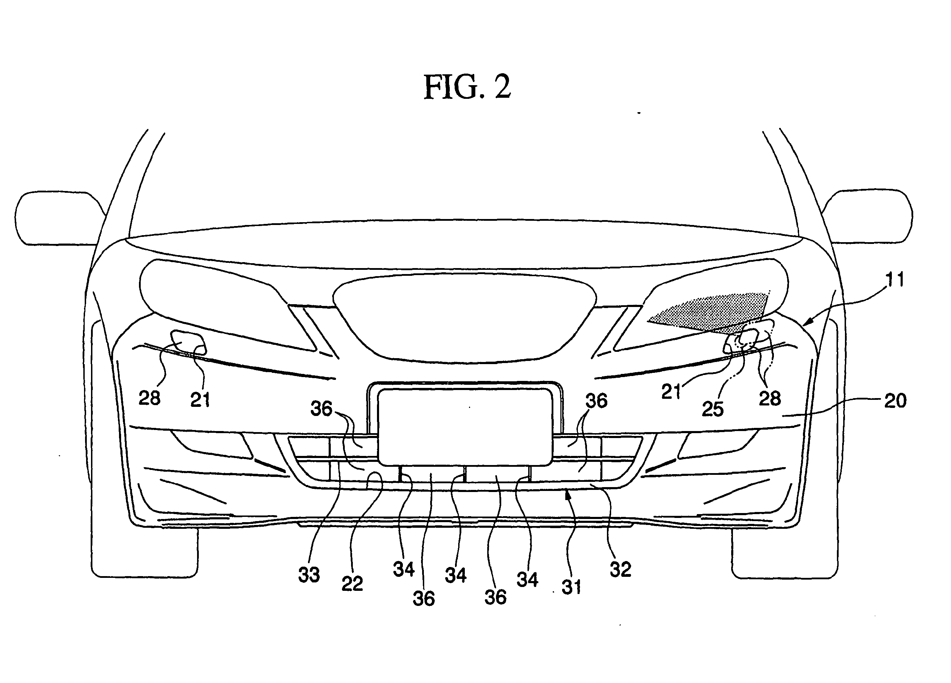

As shown in FIG. 2, the bumper 11 has a bumper body 20 that extends in the widthwise direction of the vehicle and mainly forms the design surface of the vehicle. Nozzle openings 21 are formed in the upper portion of both ends of the bumper body 20 in the widthwise direction of the vehicle. In addition, an air intake opening 22 (an opening) extending in the widthwise direction of the vehicle is formed in the lower portion of the bumper body 20 in the center in the widthwise direction of the vehicle. Note that the bumper body 20 is integrally formed using a synthetic resin, and normally is used after the surface is coated.

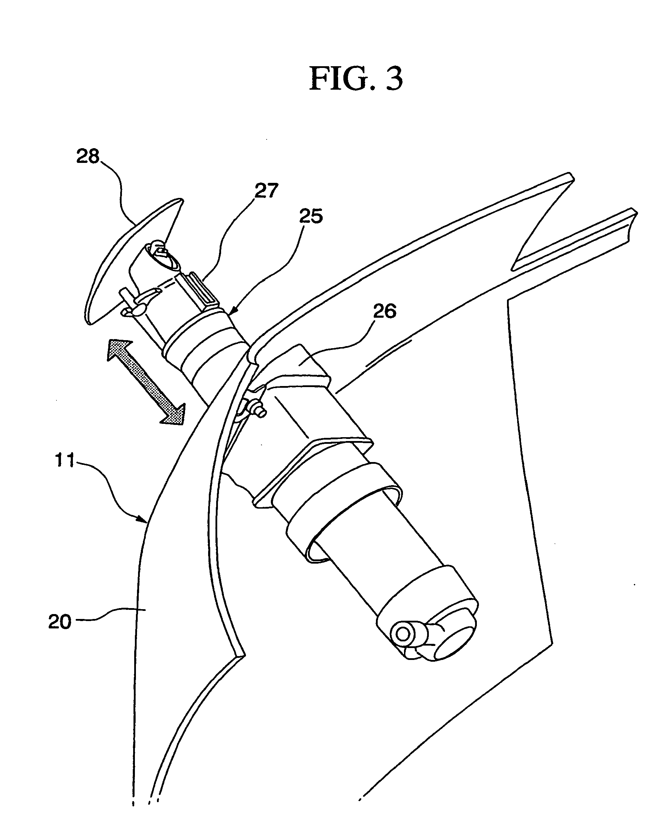

Here, the nozzle opening 21 allows the washer nozzle 25 shown in FIG. 3 to project and retract. The washer nozzle 25 is for washing the headlight 24. The washer nozzle 25 includes a base portion 26 that is mounted on the back side of the bumper body 20 and a nozzle body 27 that projects outside of the bumper body 20 from the base portion 26 through the nozzle opening 21 and retracts therein. A cover 28 is provided on the upper end of the nozzle body 27, and the nozzle opening 21 is closed by this cover 28 when the nozzle body 27 retracts into the bumper body 20.

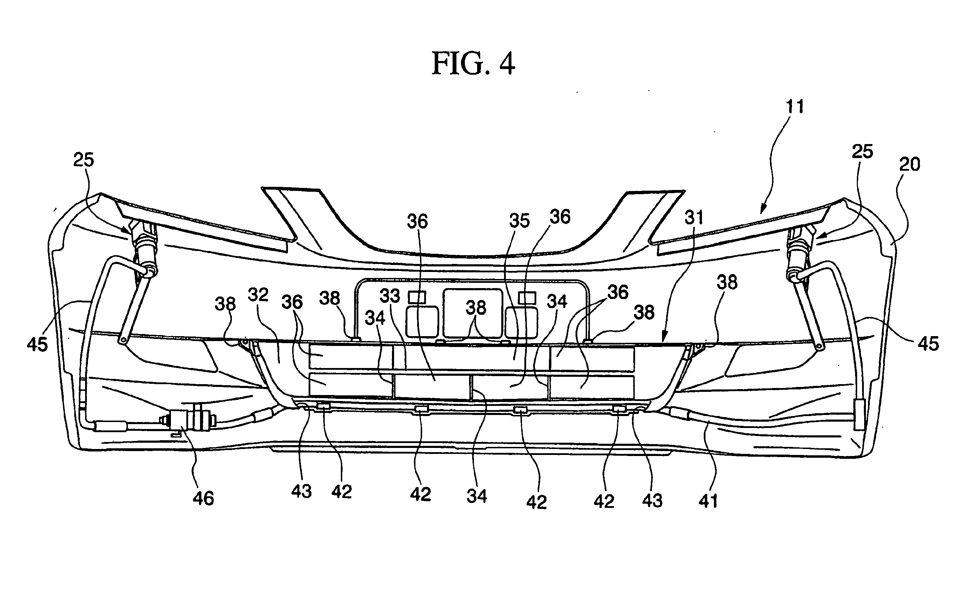

As shown in FIG. 2 and FIG. 4, the bumper 11 has a bumper garnish 31 that is provided over the entire air intake opening 22, which extends in the lengthwise direction of the bumper body 20. This bumper garnish 31 has a shape that extends in the widthwise direction of the vehicle, conforming to the shape of the air intake opening 22. That is, the bumper garnish 31 is provided along the lengthwise direction of the bumper body 20.

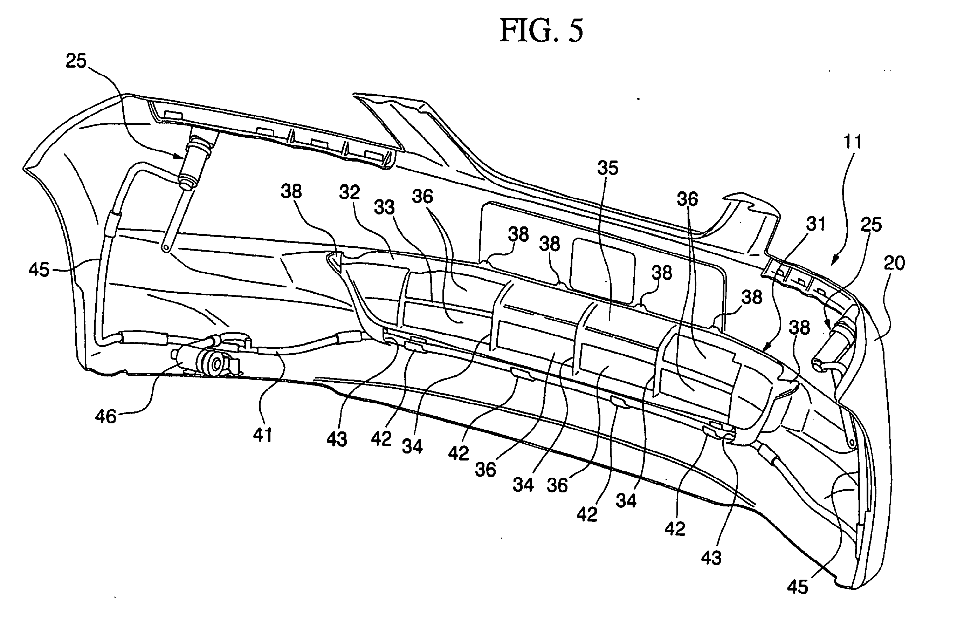

As shown in FIG. 5, the bumper garnish 31 includes a frame 32 that forms the outside edge thereof, a transverse plate 33 extending along the widthwise direction of the vehicle at the center of the frame 32 in the vertical direction, and vertical plates 34 extending along the vertical direction at a plurality of locations on the frame 32 in the widthwise direction of the vehicle. Among the plurality of portions enclosed by the transverse plate 33 and the vertical plates 34, the center upper portions in the widthwise direction of the vehicle form the closed portions 35 and the remainder forms the openings 36, which are open.

This bumper garnish 31 is mounted on a plurality of installation portions 38 provided on the upper edge of the frame 32 and on an installation portion (not illustrated) provided on the lower edge of the frame so as to be in contact with the back surface of the peripheral edge of the air intake opening 22 of the bumper body 20. Note that, as shown in FIG. 1, the bumper garnish 31 is disposed below the bumper body 13.

Clamping devices (a retaining device) 42 that conform to the shape of the washer hose 41 are formed in plurality on the bumper garnish 31 at predetermined intervals in the widthwise direction of the vehicle. The clamping devices 42 are for retaining the washer hose (pipe member) 41 along the lower edge of the frame 32. The washer hose 41 communicates with the washer nozzle 25 described above and supplies washing liquid. In addition, the slit portions (a retaining device) 43 that retain the washer hose 41 are formed in the widthwise direction outside the clamping devices 42 at both ends in the widthwise direction of the vehicle. That is, the clamping devices 42, which conform to the shape of the washer hose 41, and slit portions 43, which are closer to the end portions than the clamping devices 42, are formed at the ends of the bumper garnish 31 in the lengthwise direction.

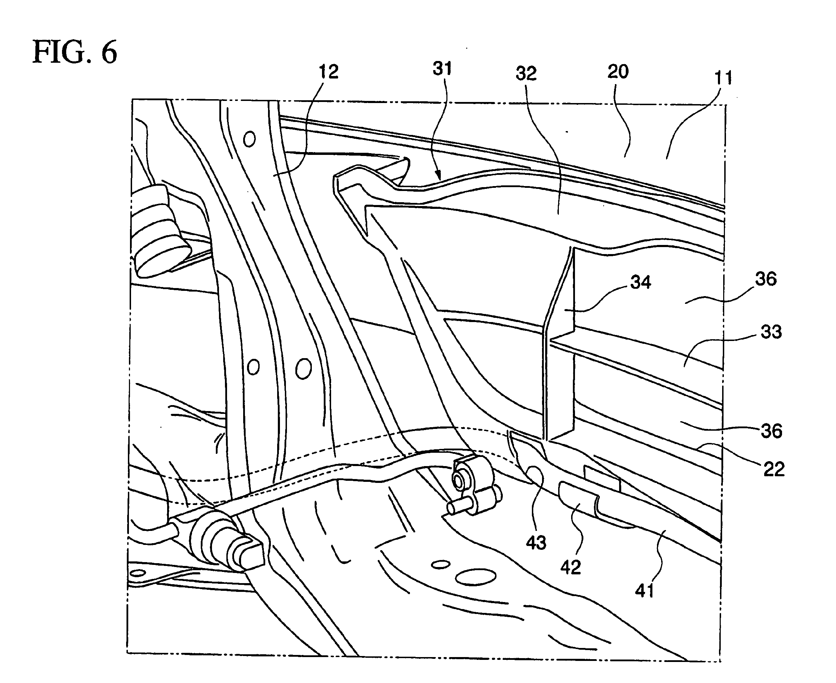

As shown in FIG. 6, the cross-section of each of the clamping devices 42 perpendicular to the widthwise direction of the vehicle opens upward so as to conform to the shape of the washer hose 41, and at the same time, the upper end forms a curved shape that is closer to the frame 32 than the bottom thereof, and this cross-section forms a shape that is continuous in the widthwise direction of the vehicle. In addition, the circular shaped washer hose 41 is pushed downward from the top into each of the clamping devices 42 to an orientation that extends in the widthwise direction of the vehicle, and thereby each of the clamping devices 42 retains the circumferential surface of the washer hose 41 against the frame 32. In this state, the clamping devices 42 retain the washer hose 41 oriented along the lower edge of the frame 32 of the bumper garnish 31 that extends in the lengthwise direction and in proximity to the lower edge thereof.

The slit portions 43 are formed in outside regions, as viewed in the widthwise direction of the vehicle, of the frames 32 that respectively house clamping devices 42 located at both ends in the widthwise direction of the vehicle at intervals that are narrower than the intervals between adjacent clamping devices 42. The slit portions 43 have a shape that passes through the frame 32 in a substantially longitudinal direction of the vehicle and exit at the bottom. In the frame 32, the outer edges of the slit portions 43 in the widthwise direction of the vehicle are offset more than the inner edges of the slit portions 43 in the widthwise direction of the vehicle on the rear side in the lengthwise direction of the vehicle. As a result, the washer hose 41 that is pressed into the slit portions 43 from below is retained in an orientation substantially along the lengthwise direction of the bumper garnish 31. Note that the width of the bottom of the slit portions 43 is narrower than the width of the top so that the washer hose 41 can be retained at the top.

The bumper garnish 31 is integrally formed using a synthetic resin, and is used without coating. Here, during integral molding, the clamping devices 42 and the slit portions 43 that retain the washer hose 41 are both integrally formed on the bumper garnish 31.

When arranging the washer hose 41 on the bumper 11 having the bumper garnish 31 and the bumper body 20 described above, the entire washer hose 41 is aligned in the widthwise direction of the vehicle. By inserting both ends thereof through the slit portions 43, the washer hose 41 is guided to the outside (front side) of the bumper garnish 31, and thereby the center portion of the washer hose 41 provided inside (rear side) the bumper garnish 31 is retained by being inserted into the plurality of clamps 42. As a result, the washer hose 41, which is retained by the clamps 42 so as to be oriented along the lower edge portion of the bumper garnish 31 that extends in the lengthwise direction, is arranged along and in proximity to the lower edge portion of the bumper garnish 31 that extends in the lengthwise direction. In addition, a portion of the washer hose 41 that exits through the slit portions 43 to the front of the bumper garnish 31 and extends to the outside in the widthwise direction of the vehicle passes between the bumper body 20 and the radiator core support 12.

In addition, at both ends of in the widthwise direction of the vehicle, the washer hose 41 described above communicates with the washer nozzle 25 via another separate washer hose 45, and at the same time, communicates with a washer pump 46 after branching from the communication position of the washer hose 41 and one of the washer hoses 45, and further communicates with a washing liquid supply side (not illustrated).

According to the present embodiment described above, clamping devices 42 and slit portions 43 that retain the washer hose 41 are integrally formed on the bumper garnish 31 that is provided in the air intake opening 22 formed in the bumper body 20, and thus the washer hose 41 can be retained in the integrally formed clamping devices 42 and the slit portions 43, and separate clips become unnecessary. Therefore, it is possible to reduce the number of parts, possible to reduce the mounting time, and possible to improve the appearance after the pipe member is arranged. In addition, the clamping devices 42 and the slit portions 43 that retain the washer hose 41 are integrally formed on the bumper garnish 31, and thus even if shrinkage defects occur in the bumper garnish 31 that originate in the formation thereof, the bumper body 20, which mainly forms the design surface, will not be affected. Therefore, it is possible to prevent degradation in the quality of the external appearance of the bumper body 20.

In addition, the washer hose 41 is arranged along the lengthwise direction of the bumper garnish 31 in the clamping devices 42 and the slit portions 43 that retain the washer hose 41 oriented along the lower edge of the bumper garnish 31 extending in the lengthwise direction. Thereby, the retaining orientation and the arrangement direction are identical, and thus it is possible to arrange the washer hose 41 easily. Therefore, large bends and the like do not occur in the washer hose 41, and the flow of liquid therein is not hindered.

Furthermore, at the ends of the bumper garnish 31 in the lengthwise direction, after the washer hose 41 is retained in the clamps 42 that conform to the shape thereof, it is inserted through slit portions 43 closer to ends and guided to the outside. Thus, the washer hose 41 can be guided to the outside while avoiding the center portion in the lengthwise direction, whose design layout is difficult, and the arrangement can be carried out easily. Therefore, large bends do not occur in the washer hose 41, and the flow of the liquid therein is not hindered. In addition, after the washer hose 41 is retained in the bumper garnish 31 by the clamping devices 42, it is passed through the slit portions 43. Thus, the washer hose 41 can be guided to the outside from the slit portions 43 without becoming separated from the bumper garnish 31.

In addition, the washer hose 41 is provided along the lower edge portion of the bumper garnish 31 provided under the bumper beam 13, and thus it is possible to arrange the washer hose 41 avoiding the bumper beam 13.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

## Claims

1. A bumper structure comprising
a bumper body (20) **characterized in that:**
a bumper garnish (31) is disposed in an opening (22) defined in the bumper body (20); and
a retaining device (42, 43) is integrally formed in the bumper garnish (31) and is retaining a pipe member (41).

2. A bumper structure according to claim 1, wherein the bumper garnish (31) is disposed along a lengthwise direction of the bumper body (20), and the retaining device (42, 43) retains the pipe member (41) in an arrangement in which the pipe member (41) is arranged along a lengthwise direction of the bumper garnish (31) and along an edge portion of the bumper garnish (31) that extends in the lengthwise direction of the bumper garnish (31).

3. A bumper structure according to claim 2,
wherein the retaining device (42, 43) comprises, in a lengthwise end region of the bumper garnish (31), a clamping device (42) that conforms to a shape of the pipe member (41), and a slit portion (43) that is located closer to an end of the bumper garnish (31) than the clamping device (42), and
wherein the pipe member (41) is arranged by being retained by the clamping device (42) and being inserted through the slit portion (43).

4. A bumper structure according to any one of claims 1 to 3, wherein the bumper garnish (31) is disposed below of a bumper beam (13) that is connected to a body frame, and the pipe member (41) is arranged along a lower edge portion of the bumper garnish (31).

## Patentansprüche

1. Stoßfängerkonstruktion umfassend
einen Stoßfängerkörper (20), **dadurch gekennzeichnet, dass**:
ein Stoßfängerdekorelement (31) in einer Öffnung (22) angeordnet ist, die im Stoßfängerkörper (20) vorgegeben ist; und
eine Festhaltevorrichtung (42, 43), die mit dem Stoßfängerdekorelement (31) einstückig ausgebildet ist und ein Rohrelement (41) festhält.

2. Stoßfängerkonstruktion gemäß Anspruch 1, worin das Stoßfängerdekorelement (31) entlang einer Längsrichtung des Stoßfängerkörpers (20) angeordnet ist, und die Festhaltevorrichtung (42, 43) das Rohrelement (41) in einer Anordnung festhält, bei der das Rohrelement (41) entlang einer Längsrichtung des Stoßfängerdekorelements (31) und entlang eines Randabschnitts des Stoßfängerdekorelements (31), der sich in der Längsrichtung des Stoßfängerdekorelements (31) erstreckt, angeordnet ist.

3. Stoßfängerkonstruktion gemäß Anspruch 2, worin die Festhaltevorrichtung (42, 43) in einem längsweisen Endbereich des Stoßfängerdekorelements (31) eine Klemmvorrichtung (42), die einer Form des Rohrelements (41) entspricht, und einen Schlitzabschnitt umfasst, der näher an einem Ende des Stoßfängerdekorelements (31) als die Klemmvorrichtung (42) angeordnet ist, und
worin das Rohrelement (41) angeordnet wird, indem es durch die Klemmvorrichtung (42) festgehalten wird und durch den Schlitzabschnitt (43) eingesetzt ist.

4. Stoßfängerkonstruktion gemäß einem der Ansprüche 1 bis 3, worin das Stoßfängerdekorelement (31) unterhalb eines Stoßfängerträgers (13), der mit dem Karosserierahmen verbunden ist, angeordnet ist und das Rohrelement (41) entlang eines unteren Randabschnitts des Stoßfängerdekorelements (31) angeordnet ist.

## Revendications

1. Structure pare-chocs comprenant :
un corps pare-chocs (20) **caractérisée en ce que** :
une garniture pare-chocs (31) est agencée dans une ouverture (22) pratiquée dans le corps pare-chocs (20) ; et
un dispositif de retenue (42, 43) fait partie intégrante de la garniture pare-chocs (31) et retient un élément tubulaire (41).

2. Structure pare-chocs selon la revendication 1, dans laquelle la garniture pare-chocs (31) est disposée le long d'une direction de la longueur du corps pare-chocs (20), et le dispositif de retenue (42, 43) retient l'élément tubulaire (41) dans une configuration dans laquelle l'élément tubulaire (41) est disposé le long d'une direction de la longueur de la garniture pare-chocs (31) et le long d'une portion latérale de la garniture pare-chocs (31) qui s'étend dans une direction de la longueur de la garniture pare-chocs (31).

3. Structure pare-chocs selon la revendication 2,
dans laquelle le dispositif de retenue (42, 43) comprend, dans une région d'extrémité de la direction de la longueur de la garniture pare-chocs (31), un dispositif de verrouillage (42) qui se conforme à la forme de l'élément tubulaire (41), et une portion de fente (43) qui est située plus proche d'une extrémité de la garniture pare-chocs (31) que le dispositif de verrouillage (42), et
dans laquelle l'élément tubulaire (41) est disposé en étant retenu par le dispositif de verrouillage (42) et inséré dans la portion de fente (43).

4. Structure pare-chocs selon l'une quelconque des revendications 1 à 3, dans laquelle la garniture pare-chocs (31) s'étend en dessous d'une poutre pare-chocs (13) qui est reliée à une carrosserie, et l'élément tubulaire (41) est disposé le long d'une portion latérale inférieure de la garniture pare-chocs (31).
